# EUROPEAN PATENT SPECIFICATION

(11) **EP 0 672 883 B1**
(45) Date of publication and mention of the grant of the patent: **01.08.2001**
(21) Application number: 95301303.4
(22) Date of filing: 28.02.1995
(51) Int. Cl.: F41H 5/04

(54) **Antitrauma packet**
Antitraumapaket
Paquet antitrauma

(30) Priority: 28.02.1994 AR 32753394
(43) Date of publication of application: 20.09.1995
(73) Proprietor: Niltar Trading S.A., Montevideo (UY)
(72) Inventor: Andujar, Fernando Hector, 1425 Buenos Aires (AR)
(74) Representative: Whalley, Kevin

(56) References cited:
- EP-A- 0 492 087
- WO-A-80/02252
- US-A- 3 479 811

## Description

This invention relates to an antitrauma packet for supplementing the resistance to mechanical impact and/or ballistic penetration of structures formed by panels of woven or felt-like (unwoven) or laminated polymeric fibers.

After the invention of lineal polyamides (nylon, nylon 6, etc.), research continued in the search for new synthetic textile fibers, polyester fibers, polyurethane fibers, etc. which led to the invention of a kind of fibers which are remarkable for their heat resistance and their resistance to mechanical strain, classified under the generic name of "para amide fibers" (or simply aramids), which include Kevlar ^{R} and Twaron ^{R}, which are the two most important members of these kinds of fibers. (Nomex^{R})

These aramids are the result of the amide chain and the polymerization of p-diaminobenzene and terephthalic acid (the first example of this series was obtained by polymerizing p-aminobenzene acid, coded PPD-T).

In view of their remarkable mechanical and dynamic properties, their reduced expansion and thermal conductivity, their excellent abrasion and heat resistance and chemical inertia, the aramid fibers, and in particular Kevlar and Twaron, have been shown to have a great number of applications in the manufacture of ropes, laminated tissues, etc. and also in the field of ballistic protection (both as soft body armors and heavy, high coverage armors), instead of equipment (body armors and bullet-resistant vests, for example) made of polyesters or nylon fibers.

The application of polymeric fiber materials in ballistic protection came to replace other integrated structures with denser materials such as glass fibers or aluminium fiber showing improved characteristics, since for equal weight, the ballistic resistance of the above mentioned fibers is greater. It is considered that the ballistic resistance shown by fibers in general is due to the fact that, as a consequence of the impact and the penetration of bullets, the yarns are stretched and absorb the energy of the projectile and dissipate it laterally (through the fibrous yarns which surround the impact zone) and also longitudinally in the direction of the projectile. Aramids, the same as their predecessors, the aliphatic polyamides and the polyesters, are used under the form of flexible structures (of woven fibers arranged in juxtaposed layers or of masses of felt-like (unwoven) fibers having the thickness determined by the degree of exposure to projectiles) or rigid structures of laminate aramids for fragment and bullet-resistant garments and body armor panels, structures and pieces, applicable both for soft armors and heavy armors.

Materials used in ballistic protection should meet the regulations included in standard norms which vary in each country. Said norms establish the conditions to measure the speed of projectiles, to measure penetration, to determine the limit, Ballistic resistance, for example, is the maximum velocity at which a fired bullet may be stopped and the bullet resistance corresponds to the V₅₀ value defined as the velocity at which the penetration probability is 50%.

Another factor contemplated by said norms which refers to the body protection and which is important for the design and manufacture of personal body armors and garments is the magnitude and the profile of the deformation in the armor backing material or support of a bullet defense. Said deformation, which for a certain defense, depends on the caliber, the weight, the velocity and the kind of bullet or fragment, may cause damage or bodily injuries, the severity of which also depends on the point of impact, since part of the energy of each impact is felt and received in the area of the body which is in line with the point of impact and results in traumas of a particularly severe nature when they correspond to the hepatic region, the left iliac cavity, the spine, etc. The maximum deformation of the rear part of a ballistic defense after the impact is called trauma, quantitatively expressed by its depth (the length of the deformation in the direction of the impact).

In practice, ballistic protection (soft or rigid) is obtained by panels (also called packets) formed by a layer or a plurality of layers of fabrics made of woven or felt-like (unwoven) aramid fibers, such as Kevlar 29, Kevlar 49, Twaron CT 930, Twaron 1260, etc., each panel being covered by a hermetic, waterproof, flexible cover or envelope having a thickness and design depending on the level of protection desired and the bullet parameters. Depending on each case, the flexible cover may be backstitched in order to increase the density of the fiber mass.

In laminated materials, the woven or felt-like (unwoven) aramid fibers are combined with polyester resins, phenolic resins, elastomers, and depending on each case, with carbon fibers or ceramic fibers to form a structure to be applied in heavy ballistic armors (helmets, defensive armors for certain vehicles, for the protection of shelters or cabins, etc.), structural parts for land vehicles, airplanes, etc.

It has already been stated that the trauma may be controlled by modifying the thickness of the ballistic panels, the density of the fiber mass, the weave pattern of the fibers, etc. or incorporating additional laminates of antitrauma packets or aramid fillings or ceramic plates which cover the whole or a part of the front or the back of the ballistic panels.

It has now been found, and this is the object of the present invention, that it is possible to increase the ballistic resistance and the bullet limit and reduce the magnitude of the trauma of structures resistant to impact and/or to ballistic penetration.

Attention is also drawn to the disclosure of WO80/02252, which describes an impact resistant composite structure constructed of a facing portion designed to blunt and fragment an armor piercing-type bullet and absorb some of the bullet's impact force, and a base layer designed to absorb and contain the remaining impact force of the bullet fragments. The facing layer includes a plurality of closely spaced ceramic tiles embedded in an adhesive elastic resin having a suspended mixture of polymeric microspheres, which isolate each of the ceramic tiles.

Attention is further drawn to the disclosure of US-A-3479811, which describes that expandable microspheres are incorporated in a thread or yarn, and subsequently heated to expand the microspheres and bulk the yarn. Bulking of the yarn after weaving or sewing provides tightly woven fabric or locked-in sewing thread.

It is an object of the present invention to provide an antitrauma packet to supplement the resistance to the mechanical impact and/or the ballistic penetration of structures formed by panels of woven or felt-like (unwoven) or laminated polymeric fibers.

The present invention provides an antitrauma packet for supplementing the resistance to mechanical impact and/or to ballistic penetration of structures formed by panels of woven or felt-like (unwoven) or laminated polymeric fibers, which packet comprises at least one layer or sheet each of which defines a matrix of woven or felt-like (unwoven) polymeric fibers wherein a plurality of hollow microspheres are scattered.

Preferably said matrix comprises polyester, nylon or aramid fibers or mixtures thereof; and more preferably said fibers are of poly (p-diphenylamid of terephthalic acid).

The antitrauma packet of the invention preferably comprises a plurality of laminates, each of which comprises a felt of polyester fibers, aramid fibers or mixtures thereof which form the matrix where a plurality of hollow microspheres are scattered; and more preferably each laminate comprises about 40% p/w of microspheres, the balance being the matrix of felt-like (unwoven) fibers.

In the antitrauma packet of the invention, it is preferable that orifices are scattered in the fibers.

The invention also provides a reinforced structure for armour, comprising an antitrauma packet as defined above, and an envelope defined by a closed and waterproof cover, the packet filling the envelope.

The antitrauma packet of the present invention is an important improvement in the present state of the art, both in relation to body protection and in reinforced structures and armors conceived for ballistic defenses such as protection against mechanical impacts. The importance of said improvement refers essentially to the extent of the supplementary antitrauma effect provided by the packet of this invention, in view of the additional weight or load introduced by said packet, when associated with conventional defenses.

The antitrauma packet of this invention comprises a plurality of juxtaposed laminates or layers of a substrate or matrix of woven or felt-like (unwoven) fibers, as a support for the hollow microspheres randomly scattered in said matrix.

These kinds of materials are well known in the art involving the manufacture of laminates, as low weight reinforcing material, to replace other known reinforcing materials, such as liners or blankets made of reticulate woven polyester fibers, glass fibers or aramid fibers, etc., obviously having a heavier weight.

Even if the present invention preferably refers to the commercial product called Coremat ^{R} as a component responsible for the additional antitrauma effect characteristic of this invention, it should be understood that this invention does not depend on said product and the scope and purposes of this invention comprise any product including hollow microspheres as a component of antitrauma structures.

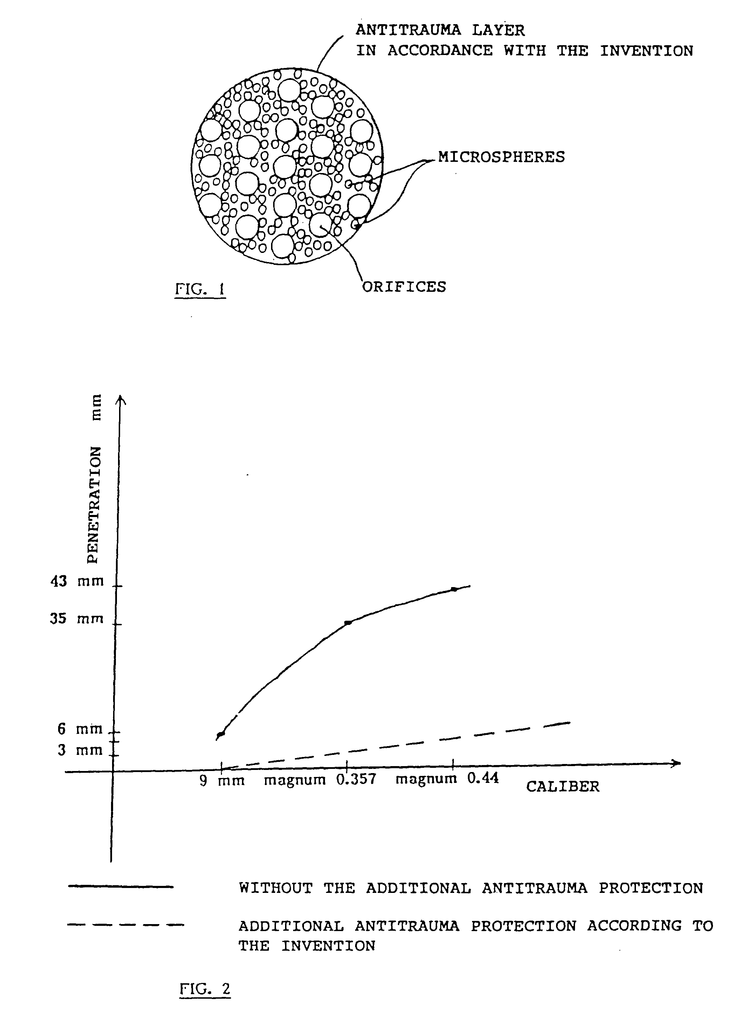

The product called Coremat ^{R} (Lantor Group) is presented under the form of blankets or laminates of felt-like (unwoven) polyester fibers having a variable thickness and density. In the tests conducted and explained hereinbelow, blankets with a thickness of 2 mm were used. These blankets had 60% p/w of polyester fibers and 40% p/w of hollow polymeric microspheres and with a density of approximately 40/g/m²/mm of thickness. The number of microspheres plays a fundamental role in obtaining such reduced density levels, in addition to a plurality of millimetric perforations symmetrically distributed, such as it is shown in Figure 2A.

The packet of the present invention should be united with a number of laminates in accordance with the level of supplemental protection required. This depends on the kind and the velocity of the bullet when it refers to ballistic defenses or to the strength or the condition of a certain mechanical impact when it refers to defenses against purely mechanical aggressions or effects (bumper or fender structures) in the protection, for example, of determined critical parts or areas of civil or military vehicles.

The antitrauma packet of this invention has reduced resistance to ballistic penetration and to mechanical impact. It has already been indicated that the material which carries the microspheres, used as an example in this invention, has been conceived and applied as a reinforcement of laminate materials, having a function similar to that of other reinforcement materials, but being lightweight.

In this invention, the fiber structure and the microspheres make up a material having unexpected antitrauma effects, as shown in the tests explained hereinbelow.

The packet of this invention can have the form of units or panels with a determined number of juxtaposed sheets included in a hermetic envelope or cover, which might be coupled with conventional protection structures formed by panels made of the aramid fibers mentioned above upon description of the prior art. Another possible alternative is to associate in a same packet any of the known structures resistant to ballistic penetration and/or mechanical impact (Kevlar or Twaron sheets or felts, for example) with the antitrauma packet, as disclosed in this invention, in that order, i.e. with the conventional structure at the front and the packet of this invention at the back, as a support.

For the purposes of this invention, the matrix on which the microspheres are scattered does not depend on a particular kind of fibers or microspheres. The known material, the Coremat^{R} (polyester fibers and hollow polystyrene microspheres) has been specifically mentioned herein and it is considered that other woven or felt-like (unwoven) structures, such as nylon, Kevlar or Twaron and compounds thereof, are useful for the purpose of this invention and should be considered within the scope thereof.

The microspheres distributed in said matrix are hollow particles with a 1 to 100 micron average diameter, which values are indicated for illustrative purposes only. It obviously refers to hollow particles which are not so tiny as to behave as a powder material nor so big as to be virtual bores of the matrix.

### Ballistic Tests

Comparative tests of ballistic penetration and depth of the trauma were conducted firing bullets of different caliber on a target formed by a 40cm x 40 cm panel made of monofilament and microfilament Kevlar or Twaron fibers, compacted in a polyester backstitched covering having sealed edges.

The following Table shows the information corresponding to one of these tests:

### Distance of the firing: in millimeters

| **Caliber** | **Without the antitrauma panel** | **With the antitrauma panel** |
|---|---|---|
| 9 mm | 70 mm | 0 |
| .357 Magnum | 35.0 mm | 3 mm |
| .44 Magnum | 43-44 mm | 6 mm |

The antitrauma panel in accordance with the present invention, used in these tests was formed by 10 layers of 2 mm thick Coremat^{R} (a product registered by Lantor Group) formed by a non typical polyester matrix (60% of weight) and hollow microspheres (40% of weight), with an apparent density of 40 g/m²/mm thickness.

The invention will be further described, by way of example only, with reference to the accompanying drawings, in which:
Figure 1 corresponds to an augmented scale view of an antitrauma layer of the present invention; and
Figure 2 is a representative graphic of the depth of the trauma in accordance with the data of Table 1.

The graphic of said Figure 2 shows the antitrauma effect which is verified by supplementing a conventional panel of Kevlar fibers with a package of 12 Coremat laminates with a set which weighs 40g. These 40 g of the protection according to the invention permit to reduce the ballistic deformation of the conventional backing for a .44 Magnum gun of 43 mm to 7.8 mm.

## Claims

1. An antitrauma packet for supplementing the resistance to mechanical impact and/or to ballistic penetration of structures formed by panels of woven or felt-like (unwoven) or laminated polymeric fibers, which packet comprises at least one layer or sheet each of which defines a matrix of woven or felt-like (unwoven) polymeric fibers wherein a plurality of hollow microspheres are scattered.

2. An antitrauma packet as claimed in claim 1, characterized in that said matrix comprises polyester, nylon or aramid fibers or mixtures thereof.

3. An antitrauma packet as claimed in claim 2, characterized in that said fibers are of poly (p-diphenylamid of terephthalic acid).

4. An antitrauma packet as claimed in any of claims 1 to 3, characterized by comprising a plurality of laminates, each of which comprises a felt of polyester fibers, aramid fibers or mixtures thereof which form the matrix where a plurality of hollow microspheres are scattered.

5. An antitrauma packet as claimed in claim 4, characterized in that each laminate comprises about 40% p/w of microspheres, the balance being the matrix of felt-like (unwoven) fibers.

6. An antitrauma packet as claimed in any of claims 1 to 5, characterized by orifices scattered in the fibers.

7. A reinforced structure for armour, comprising an antitrauma packet as claimed in any of claims 1 to 6, and characterized by an envelope defined by a closed and waterproof cover, the packet filling the envelope.

## Patentansprüche

1. Antitraumapaket zur Ergänzung des Widerstandes, den Strukturen, die aus Platten von gewebten oder filzartigen (nicht-gewebten) oder laminierten Polymerfasern gebildet werden, gegenüber mechanischem Stoß und/oder ballistischer Durchdringung bieten, wobei das Paket wenigstens eine Lage oder Schicht aufweist, von denen jede eine Matrix aus gewebten oder filzartigen (nicht-gewebten) Polymerfasern definiert, in der eine Vielzahl von hohlen Mikrokügelchen verstreut ist.

2. Antitraumapaket nach Anspruch 1, dadurch gekennzeichnet, daß die Matrix Polyester-, Nylon- oder Aramidfasern oder deren Gemische umfaßt.

3. Antitraumapaket nach Anspruch 2, dadurch gekennzeichnet, daß die Fasern aus Poly-(p-Diphenylamid von Terephthalsäure) bestehen.

4. Antitraumapaket nach einem der Ansprüche 1 bis 3, gekennzeichnet durch eine Vielzahl von Laminaten, von denen jedes einen Filz aus Polyesterfasern, Aramidfasern oder deren Gemischen umfaßt, welche die Matrix bilden, in der eine Vielzahl von hohlen Mikrokügelchen verstreut ist.

5. Antitraumapaket nach Anspruch 4, dadurch gekennzeichnet, daß jedes Laminat etwa 40 Gew.-% Mikrokügelchen aufweist, während der Ausgleich aus der Matrix von filzartigen (nicht-gewebten) Fasern besteht.

6. Antitraumapaket nach einem der Ansprüche 1 bis 5, gekennzeichnet durch Öffnungen, die in den Fasern verstreut sind.

7. Verstärkte Struktur für einen Schutzpanzer, die ein Antitraumapaket nach einem der Ansprüche 1 bis 6 aufweist und gekennzeichnet ist durch eine Hülle, die durch eine geschlossene und wasserdichte Ummantelung definiert wird, wobei das Paket die Hülle füllt.

## Revendications

1. Paquet anti-traumatique pour augmenter la résistance à un impact mécanique et/ou à une pénétration balistique de structures formées par des panneaux de fibres polymères tissées ou feutrées (non tissées) ou laminées, lequel paquet comprend au moins une couche ou une feuille, dont chacune définit une matrice de fibres polymères tissées ou feutrées (non tissées), dans laquelle une pluralité de microsphères creuses est dispersée.

2. Paquet anti-traumatique suivant la revendication 1, caractérisé en ce que ladite matrice comprend des fibres de polyester, de nylon ou d'aramide ou des mélanges de celles-ci.

3. Paquet anti-traumatique suivant la revendication 2, caractérisé en ce que lesdites fibres sont constituées de poly(p-diphénylamide d'acide téréphtalique).

4. Paquet anti-traumatique suivant l'une quelconque des revendications 1 à 3, caractérisé par le fait de comprendre une pluralité de stratifiés, dont chacun comprend un feutre de fibres de polyester, de fibres aramides ou de mélanges de celles-ci qui forme la matrice, dans laquelle une pluralité de microsphères creuses est dispersée.

5. Paquet anti-traumatique suivant la revendication 4, caractérisé en ce que chaque stratifié comprend environ 40% p/w de microsphères, le reste étant constitué par la matrice de fibres feutrées (non tissées).

6. Paquet anti-traumatique suivant l'une quelconque des revendications 1 à 5, caractérisé par des orifices dispersés dans les fibres.

7. Structure renforcée pour une cuirasse, comprenant un paquet anti-traumatique suivant l'une quelconque des revendications 1 à 6 et caractérisée par une enveloppe définie par une couche de recouvrement fermée et imperméable à l'eau, le paquet remplissant l'enveloppe.
